# FASCICULE DE BREVET EUROPEEN

(11) **EP 0 504 014 B1**
(45) Date de publication et mention de la délivrance du brevet: **24.07.1996**
(21) Numéro de dépôt: 92400573.9
(22) Date de dépôt: 05.03.1992
(51) Int. Cl.: H04Q 11/04

(54) **Procédé et agencement concentrateurs en mode paquet pour terminaux de données desservis par un réseau rnis**
Verfahren und Vorrichtung zur Konzentration von Paketen für ISDN-Datenendgeräte
Method and packet mode concentrator arrangement for data terminals connected to an ISDN-network

(30) Priorité: 08.03.1991 FR 9102819
(43) Date de publication de la demande: 16.09.1992
(73) Titulaire: ALCATEL BUSINESS SYSTEMS, F-75008 Paris (FR)
(72) Inventeur: Allouis, Jacques, F-67540 Ostwald (FR); Fuhrer, Jean-Claude, F-67640 Fegersheim (FR)
(74) Mandataire: Schaub, Bernard

(56) Documents cités:
- EP-A- 0 404 994
- US-A- 4 792 800

## Description

L'invention concerne un procédé et un agencement concentrateurs destinés à permettre la desserte de plusieurs terminaux de données par un même canal B d'un réseau RNIS auquel ces terminaux sont reliés par l'intermédiaire d'adaptateurs et d'une terminaison numérique d'abonné, pour des transmissions de données en mode paquet.

Il est prévu de pouvoir relier des terminaux de données à un point d'accès d'un réseau de commutation de paquets tel que le réseau TRANSPAC, par l'intermédiaire d'un réseau numérique à intégration de services RNIS auquel les terminaux sont raccordés par des adaptateurs appropriés et via une terminaison numérique d'abonné pour permettre des transmissions de données par paquets, le réseau RNIS devant être raccordé au réseau de commutation de paquets en au moins ce point d'accès.

Il est également envisageable de relier entre eux des terminaux de données par l'intermédiaire d'une terminaison numérique d'abonné pour réseau RNIS et éventuellement via ce réseau aux mêmes fins de transmission de données en mode paquet.

US-A-4792800 décrit un système de communication locale entre équipements terminaux d'un réseau RNIS.

Dans chacun de ces cas les données sont prévues pour être transmises par l'intermédiaire d'un canal B de réseau RNIS, dont le débit est fixé à 64kbit/s.

Une solution classique de raccordement d'un terminal de données asynchrones à une terminaison numérique d'abonné d'un réseau RNIS met en oeuvre un adaptateur AT par l'intermédiaire duquel le terminal se raccorde au niveau d'un point de référence S du modèle architectural défini par le CCITT pour ce type de réseau, l'accès dit de base à ce niveau étant usuellement référencé S0.

La terminaison numérique d'abonné, qui est par exemple un autocommutateur privé, un réseau local d'entreprise ou une installation d'intercommunication, est usuellement raccordée à une terminaison numérique de réseau TNR de réseau RNIS au niveau de point de référence T ou éventuellement à un terminal de ligne TL au niveau de point de référence U.

Le terminal de données est susceptible d'être de type asynchrone, étant par exemple un ordinateur individuel qui se raccorde à l'adaptateur AT par une liaison de type RS232C, dans des conditions fonctionnelles qui correspondent à celles recommandées par l'avis V24 du CCITT pour les transmissions de données sur ligne téléphonique.

Le terminal de données est aussi susceptible d'être de type synchrone, étant par exemple un puissant ordinateur qui se raccorde à l'adaptateur AT dans des conditions fonctionnelles qui sont celles fixées par l'avis X25 du CCITT pour les transmissions de données par paquets par l'intermédiaire d'un réseau public de données.

Dans la mesure où le débit nécessaire à un terminal de données en mode paquet est habituellement inférieur au débit possible par l'intermédiaire d'un canal B de réseau RNIS et où il est intéressant de concentrer un maximum de voies logiques exploitées par des terminaux de données sur un nombre minimal de canaux.

Ceci est particulièrement important dans le cas de terminaux connectés à un réseau de commutation de paquets via un point d'accès de réseau RNIS, ce point n'ayant inéluctablement qu'une capacité limitée de traitement, vis-à-vis du très grand nombre de terminaux raccordables.

Ceci est aussi intéressant lorsque l'on veut relier plusieurs terminaux de données à un même autre constitué par exemple par un ordinateur accédant lui-même directement à un niveau de base S0 de réseau RNIS.

La présente invention propose donc un procédé de concentration destiné à permettre la desserte de plusieurs terminaux de données, synchrones ou asynchrones, par un même canal B d'un réseau RNIS auquel réseau ces terminaux sont reliés par l'intermédiaire d'une terminaison numérique d'abonné et d'adaptateurs pour des transmissions de données en mode paquet, les terminaux de données se raccordant aux adaptateurs par des interfaces numériques V24, les adaptateurs se raccordant à la terminaison numérique d'abonné au niveau d'accès de base S0 donnant accès à deux canaux B d'information et un canal D de signalisation RNIS. Selon une caractéristique de l'invention, en cas de demande de communication par canal B entre un premier terminal de données desservi par un premier adaptateur et un accès RNIS, de type paquet, auquel un second terminal de données accède déjà, via un second adaptateur et par l'intermédiaire d'un premier canal B, il est établi une liaison de transit entre les deux adaptateurs par l'intermédiaire de la terminaison numérique d'abonné au moyen d'un second canal B, de manière que les paquets de données transmis entre le premier terminal et l'accès RNIS considéré transitent par l'adaptateur du second terminal et au travers du premier canal B, par lequel le second adaptateur communique avec cet accès RNIS, de même que les paquets concernant le second terminal.

L'invention propose aussi un agencement concentrateur mettant en oeuvre le procédé évoqué ci-dessus et par conséquent destiné à permettre la desserte de plusieurs terminaux de données, synchrones ou asynchrones, par un même canal B d'un réseau RNIS auquel réseau ces terminaux sont reliés par l'intermédiaire d'adaptateurs et d'une terminaison numérique d'abonné pour des transmissions de données en mode paquet, les terminaux de données se raccordant aux adaptateurs par des interfaces numériques V24 et les adaptateurs se raccordant à la terminaison numérique d'abonné au niveau d'accès de base S0 pour avoir accès à deux canaux B d'information et un canal D de signalisation du réseau RNIS, via la terminaison numérique d'abonné. Selon une caractéristique de l'invention, l'agencement comporte des moyens pour établir une liaison de transit par un canal B d'un premier adaptateur desservant un premier terminal et via la terminaison numérique d'abonné, vers un second adaptateur desservant un second terminal déjà en liaison par un autre canal B avec un accès RNIS, de type paquet, auquel le premier d'entre ces terminaux est à relier, de manière que les paquets de données en transitant dans une direction entre le premier terminal et l'accès RNIS considéré transitent par l'adaptateur du second terminal et au travers du canal B par lequel le second adaptateur communique avec cet accès RNIS, les paquets transitant dans une même direction pour les deux terminaux étant ainsi transmis par le même canal B entre le second adaptateur et l'accès RNIS.

L'invention, ses caractéristiques et ses avantages sont précisés dans la description qui suit, en liaison avec les figures répertoriées ci-dessous.

La figure 1 présente un schéma de principe d'un agencement de concentration selon l'invention pour une terminaison numérique d'abonné reliée à un accès de réseau RNIS.

La figure 2 présente un schéma d'un adaptateur pour agencement de concentration selon l'invention.

Le procédé et l'agencement de concentration selon l'invention, sont destinés à être mis en oeuvre au niveau d'une terminaison numérique d'abonné 1 rattachée à un réseau numérique à intégration de services RNIS 2 par au moins un accès, cette terminaison desservant notamment une pluralité de terminaux de données, tels que 3, 4, 5 et 6, nécessitant l'usage d'adaptateurs, tels que 7 et 8, pour accéder au réseau RNIS au niveau de la terminaison 1.

Comme indiqué plus haut, cette dernière se rattache le plus souvent au réseau 2 par au moins un accès de base T0 correspondant au niveau de référence T de l'architecture RNIS et ici référencé 9, afin de pouvoir communiquer avec des terminaux distants rattachés au réseau 2 via d'autres accès, tels que les accès 10, 11.

La terminaison 1 est par exemple de type autocommutateur numérique comme indiqué ci-dessus, elle comporte des moyens de commutation 12 qui sont habituellement supervisés par une logique de commande 13 associée à une horloge de synchronisation 14.

Les moyens de commutation 12 permettent de relier entre eux, à la demande, divers accès comportés par cette terminaison, ces accès étant susceptibles de correspondre à divers niveaux d'interface RNIS, en particulier au niveau de référence T, ainsi qu'indiqué plus haut pour l'accès 9, et au niveau de référence S ainsi qu'indiqué pour les accès 15 et 16 qui sont ici supposés être des accès de base S0.

Les adaptateurs des terminaux rattachés à la terminaison numérique 1 sont supposés susceptibles de se raccorder chacun à un accès de base S0, de manière à disposer chacun de possibilités de transmission par deux canaux d'information B à 64 kbit/s et d'un canal de signalisation D à 16 kbit/s au travers de la terminaison 1 et du réseau 2 auquel elle est rattachée.

Les mêmes adaptateurs 7, 8 sont aussi conçus pour se raccorder à chacun au moins un et ici deux terminaux de données, ce raccordement s'effectuant par exemple par l'intermédiaire de liaisons individuelles de type RS232C, c'est-à-dire via des interfaces fonctionnelles de type V24, ici référencées 17, 18, 19 et 20.

Dans l'exemple proposé, chaque adaptateur 7, 8 est constitué d'un module 21, 22 de raccordement pour accès S0, qui est relié à un commutateur de paquet 24, 25 permettant la commutation des paquets transmis entre le ou ici éventuellement les deux terminaux de données, rattachés à l'adaptateur considéré, et la terminaison 1 via l'accès 15 ou 16 de raccordement de cet adaptateur.

Chaque commutateur de paquet 24 ou 25, de type mémoire tampon, permet, de manière connue en soi, de faire accéder un terminal de données, raccordé à l'adaptateur qui le comporte, à l'un ou l'autre des canaux B et D dont dispose cet adaptateur via le module 21 ou 22 de raccordement à un accès de base S0 qu'il comporte.

Selon l'invention chaque commutateur de paquet 24 ou 25 permet aussi de transmettre des paquets parvenant par un canal B de l'accès de base 15 ou 16 correspondant sur l'autre canal B de cet accès.

Dans l'exemple de réalisation présenté, un module assembleur-désassembleur 26, 27 permet, si besoin est, d'assembler en paquet les données fournies par un terminal de données asynchrone, tel que 4, et de désassembler les paquets de données qui lui sont destinés.

Des organes d'aiguillage 29, 30 ou 31, 32 permettent ici de relier chaque terminal de données synchrone, tel 3, 5 ou 6, directement au commutateur de paquet 24 ou 25 de l'adaptateur auquel il est raccordé, ou encore chaque terminal asynchrone, tel 4, au même commutateur de paquet, via le module assembleur-désassembleur 26 ou 27 correspondant.

Un module de configuration 33, 34, matériel et/ou logiciel, permet notamment à l'usager d'adapter à ses besoins l'adaptateur qui comporte ce module, et en particulier choisir le positionnement des organes d'aiguillage.

Selon l'invention, ce module de configuration d'un adaptateur, tel 7, permet aussi de commander, notamment par l'intermédiaire d'instructions, l'appel d'un autre adaptateur, tel 8, lorsque d'une part au moins l'un des terminaux, tel 3, qui lui sont rattachés déclenche une procédure d'appel pour transmission de paquet vers un terminal desservi par un accès, tel 10, du réseau RNIS auquel est rattachée la terminaison 1 dont il dépend et que d'autre part cet accès 10 est soit prévu, soit déjà relié par un canal B à cet autre adaptateur 8 pour les besoins d'un des terminaux 5, 6 desservis par cet adaptateur 8.

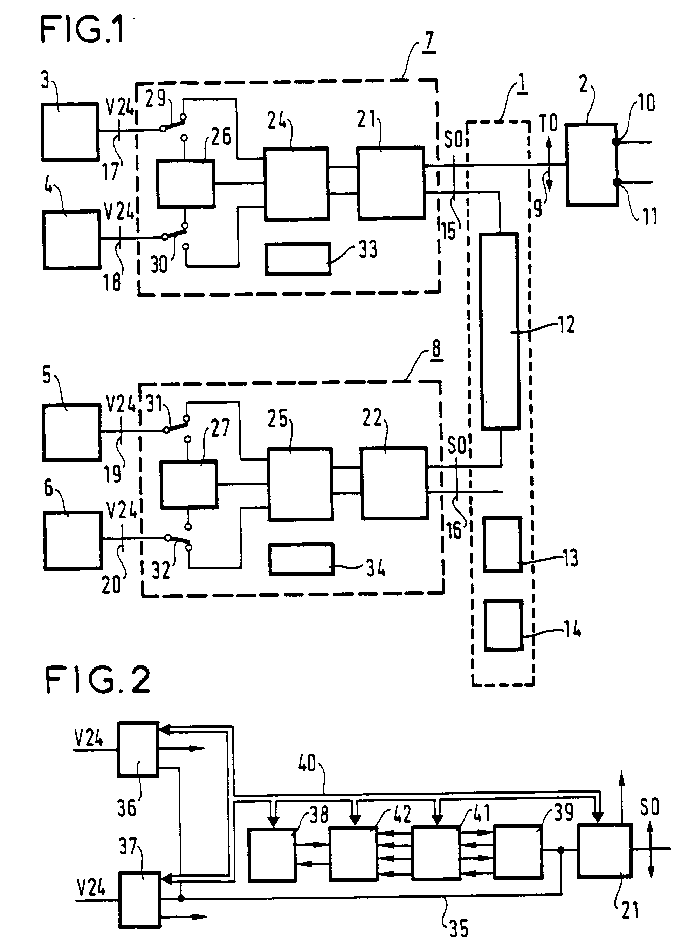

Un exemple d'adaptateur 7, 8 est proposé en figure 2, il comporte par exemple un module de raccordement 21, 22 constitué par un circuit référencé PEB 2085 commercialisé par la société SIEMENS AKTIENGESELLSCHAFT pour gérer les niveaux 1 et 2 du protocole d'accès à une liaison qui est classiquement désigné par la référence LAP D et pour réaliser des transferts de données entre les canaux B de l'accès de base S0 concerné et ceux d'un bus 35 d'entrée-sortie que comporte l'adaptateur.

Cet adaptateur comporte aussi au moins un et ici deux modules 36, 37 de support d'interface V24 pour le raccordement de chaque terminal de données directement rattaché à cet adaptateur, chaque module étant par exemple constitué par un circuit PSB2110 de la société évoquée ci-dessus.

Ce module 36, 37 assure notamment l'établissement et la libération des communications et il établit un lien direct, par interruptions, entre le terminal qu'il dessert et un processeur de commande 38 que comporte l'adaptateur, via un bus 40 affecté à ce processeur, pour la transmission des messages de commande et d'information, lorsqu'il est en mode commande.

Il assure aussi l'insertion et l'extraction des données dans les canaux B en liaison avec une mémoire 39, de type réseau logique programmé, à laquelle il est relié par le bus 20 et la transmission, par interruptions, des données au processeur 38.

Un contrôleur 41 pour communications de type série assure, de manière connue en soi, la gestion des trames de données en mode paquet, il dispose de deux canaux HDLC à cet effet et il est relié d'une part à la mémoire 39, d'autre part à un circuit 42 d'accès direct en mémoire de travail du processeur 38 pour les transferts de données entre cette mémoire de travail et le contrôleur.

Comme indiqué plus haut, en cas de demande de communication par paquet sur un canal B par un premier terminal de transmission de données, tel que 3, vers un terminal desservi par un accès RNIS, de type paquet, tel que 10, le processeur 38 de l'adaptateur 7 qui dessert ce terminal 3, vérifie s'il possède en mémoire des instructions de configuration prescrivant d'établir la liaison nécessaire vers cet accès, soit directement, soit par l'intermédiaire d'un autre adaptateur, tel 8, de manière à exploiter avec ce dernier le canal B que celui-ci exploite lui-même.

Dans ce dernier cas, l'adaptateur 7 requiert de manière habituelle sa mise en communication par la terminaison 1 avec l'adaptateur 8 par l'un des deux canaux B dont il dispose lui-même.

Après mise en communication entre eux, l'adaptateur 8 dûment configuré à cet effet assure la commutation par son commutateur 25 et la transmission vers l'accès demandé 10, via un canal B de son accès de base 16, des paquets qu'il reçoit de l'adaptateur 7 par un autre canal B de cet accès de base. Le canal B unissant l'adaptateur 8 à l'accès 10 au travers de la terminaison 1 et éventuellement d'une autre partie du réseau 2 est donc susceptible de transmettre les paquets émanant d'au moins deux terminaux différents vers ce même accès 8, à partir du moment où ces terminaux sont raccordés soit au même adaptateur comme le permettent les adaptateurs 7 et 8 ici présentés, soit encore parce qu'ils sont raccordés à des adaptateurs chaînés entre eux de manière que l'un puisse appeler le suivant, selon le procédé décrit pour l'appel de l'adaptateur 8 par l'adaptateur 7.

Ceci permet par exemple de raccorder à faible coût des terminaux de consultation à faible débit à un processeur d'une base de données commune en limitant le nombre de canaux B nécessaires au niveau d'accès du processeur de la base de données, les terminaux de consultation étant alors regroupés par grappes auxquelles sont affectés des canaux B différents.

Bien entendu le procédé et l'agencement de concentration sont aussi éventuellement exploitables dans le cas où l'accès paquet auquel plusieurs terminaux sont susceptibles de vouloir accéder simultanément est un des accès de la terminaison numérique 1 elle-même.

## Revendications

1. Procédé de concentration destiné à permettre la desserte de plusieurs terminaux de données, synchrones ou asynchrones, (3 à 6) par un même canal B d'un réseau (2) RNIS auquel réseau ces terminaux sont reliés par l'intermédiaire d'une terminaison numérique d'abonné (1) et d'adaptateurs (7,8) pour des transmissions de données en mode paquet, les terminaux de données se raccordant aux adaptateurs par des interfaces numériques V24, les adaptateurs se raccordant à la terminaison numérique d'abonné au niveau d'accès de base S0 donnant accès à deux canaux B d'information et un canal D de signalisation RNIS, le procédé étant caractérisé en ce qu'en cas de demande de communication par canal B entre un premier terminal de données desservi par un premier adaptateur et un accès (10, 11) RNIS, de type paquet, auquel un second terminal de données accède déjà, via un second adaptateur et par l'intermédiaire d'un premier canal B, il est établi une liaison de transit entre les deux adaptateurs par l'intermédiaire de la terminaison numérique d'abonné au moyen d'un second canal B, de manière que les paquets de données transmis entre le premier terminal et l'accès RNIS considéré transitent par l'adaptateur du second terminal et au travers du premier canal B, par lequel le second adaptateur communique avec cet accès RNIS, de même que les paquets concernant le second terminal.

2. Agencement concentrateur destiné à permettre la desserte de plusieurs terminaux de données, synchrones ou asynchrones, (3 à 6) par un même canal B d'un réseau (2) RNIS auquel réseau ces terminaux sont reliés par l'intermédiaire d'adaptateurs (7, 8) et d'une terminaison numérique d'abonné (1) pour des transmissions de données en mode paquet, les terminaux de données se raccordant aux adaptateurs par des interfaces numériques V24 et les adaptateurs se raccordant à la terminaison numérique d'abonné au niveau d'accès de base S0 pour avoir accès à deux canaux B d'information et un canal D de signalisation du réseau RNIS, via la terminaison numérique d'abonné, caractérisé en ce qu'il comporte des moyens pour établir une liaison de transit par un canal B d'un premier adaptateur desservant un premier terminal et via la terminaison numérique d'abonné, vers un second adaptateur desservant un second terminal déjà en liaison par un autre canal B avec un accès (10 ou 11) RNIS, de type paquet, auquel le premier d'entre ces terminaux est à relier, de manière que les paquets de données en transitant dans une direction entre le premier terminal et l'accès RNIS considéré transitent par l'adaptateur du second terminal et au travers du canal B par lequel le second adaptateur communique avec cet accès RNIS, les paquets transitant dans une même direction pour les deux terminaux étant ainsi transmis par le même canal B entre le second adaptateur et l'accès RNIS.

3. Agencement de concentration selon la revendication 2, caractérisé en ce qu'au moins un des adaptateurs qu'il comporte, possède des moyens de commutation (24, 25) permettant la transmission de paquets de l'un des canaux B dont cet adaptateur dispose vers l'autre de ces canaux B, ceci permettant l'établissement par son intermédiaire d'une liaison de transit, vers un accès RNIS, de type paquet, avec lequel cet adaptateur est en liaison par un canal B, au travers d'une terminaison numérique d'abonné, à partir d'un terminal de données desservi par un autre adaptateur rattaché lui aussi à la même terminaison.

4. Agencement de concentration selon la revendication 3, caractérisé en ce que les moyens d'établissement d'une liaison de transit comportent des instructions d'appel d'un dit second adaptateur par un dit premier adaptateur pour établissement d'une liaison par canal B entre eux par l'intermédiaire de la terminaison numérique d'abonné à laquelle ils sont rattachés, qui incorporées dans un module de configuration (33, 34) dudit premier adaptateur sont émises vers une logique de commande (13) de la terminaison numérique d'abonné, en cas d'appel de l'accès RNIS, de type paquet, auquel a accès ledit second adaptateur par un terminal de données rattaché audit premier adaptateur.

5. Agencement de concentration selon la revendication 4, caractérisé en ce qu'il comporte plusieurs adaptateurs chaînés entre eux par incorporation d'instructions d'appel appropriées dans leurs modules respectifs de configuration d'instructions en vue de la transmission de paquets de données entre des terminaux de données, rattachés chacun à l'un de ces adaptateurs et un même accès RNIS, de type paquet, par un même canal B partagé, en cas de communications simultanées par paquets de données coexistantes entre cet accès RNIS et au moins certains des terminaux reliés aux adaptateurs considérés.

## Patentansprüche

1. Konzentrationsverfahren, das mehrere synchrone oder asynchrone Datenendgeräte (3 bis 6) über einen gemeinsamen Kanal B eines ISDN-Netzes (2) bedienen soll, wobei diese Endgeräte an das Netz über einen digitalen Teilnehmeranschluß (1) und Adapter (7, 8) für Datenübertragungen im Paketmodus angeschlossen sind und mit den Adaptern über digitale Schnittstellen vom Typ V24 verbunden sind und die Adapter mit den digitalen Teilnehmeranschlüssen in Höhe des Basiszugangs SO verbunden sind, der Zugang zu zwei Informationskanälen vom Typ B und einem Signalisationskanal vom Typ D der ISDN-Signalisierung verschafft, dadurch gekennzeichnet, daß bei einem Nachrichtenübertragungswunsch über den Kanal B zwischen einem ersten Datenendgerät, das von einem ersten Adapter bedient wird, und einem ISDN-Zugang (10, 11) vom Pakettyp, zu dem ein zweites Datenendgerät bereits über einen zweiten Adapter und über einen ersten Kanal B zugreift, eine Transitverbindung zwischen den beiden Adaptern über den digitalen Teilnehmeranschluß mit Hilfe eines zweiten Kanals B hergestellt wird, so daß die zwischen dem ersten Endgerät und dem betrachteten ISDN-Zugang übertragenen Datenpakete über den Adapter des zweiten Endgeräts und über den ersten Kanal vom Typ B verlaufen, über den der zweite Adapter mit diesem ISDN-Zugang verkehrt, genauso wie die Pakete betreffend das zweite Endgerät.

2. Konzentrationseinrichtung, die mehrere synchrone oder asynchrone Datenendgeräte (3 bis 6) über einen gemeinsamen Kanal B eines ISDN-Netzes (2) bedienen soll, an das diese Endgeräte über Adapter (7, 8) und über einen digitalen Teilnehmeranschluß (1) für Datenübertragungen im Paketmodus angeschlossen sind, wobei die Datenendgeräte an die Adapter über digitale Schnittstellen vom Typ V24 und die Adapter an den digitalen Teilnehmeranschluß in Höhe des Basiszugangs SO angeschlossen sind, um Zugang zu zwei Informationskanälen vom Typ B und einem Signalisationskanal vom Typ D des ISDN-Netzes über den digitalen Teilnehmeranschluß zu haben, dadurch gekennzeichnet, daß sie Mittel aufweist, um eine Transitverbindung über einen Kanal B eines ersten Adapters, der ein erstes Endgerät bedient, und über den digitalen Teilnehmeranschluß zu einem zweiten Adapter herzustellen, der ein zweites, bereits auf einem anderen Kanal des Typs B mit einem ISDN-Zugang (10 oder 11) vom Pakettyp in Verbindung stehendes Endgerät bedient, an den das erste Endgerät anzuschließen ist, so daß die Datenpakete auf ihrem Weg in einer Richtung zwischen dem ersten Endgerät und dem betrachteten ISDN-Zugang über den Adapter des zweiten Endgeräts und den Kanal B verlaufen, über den der zweite Adapter mit diesem ISDN-Zugang in Verbindung steht, wobei die in einer gleichen Richtung für die beiden Endgeräte verlaufenden Pakete dann durch den gleichen Kanal B zwischen dem zweiten Adapter und dem ISDN-Zugang übertragen werden.

3. Konzentrationseinrichtung nach Anspruch 2, dadurch gekennzeichnet, daß mindestens einer der Adapter der Einrichtung Schaltmittel (24, 25) enthält, die Pakete eines der Kanäle B, über die der Adapter verfügt, zum anderen dieser Kanäle vom Typ B überträgt, so daß eine Transitverbindung über diesen Adapter zu einem ISDN-Zugang vom Pakettyp hergestellt werden kann, mit dem dieser Adapter über einen Kanal B und über einen digitalen Teilnehmeranschluß ausgehend von einem Datenendgerät in Verbindung steht, das von einem anderen Adapter bedient wird, der ebenfalls an den gleichen Anschluß angeschlossen ist.

4. Konzentrationseinrichtung nach Anspruch 3, dadurch gekennzeichnet, daß die Mittel zur Herstellung einer Transitverbindung Rufbefehle nach einem zweiten Adapter durch einen ersten Adapter enthalten, um eine Verbindung über den Kanal B zwischen ihnen über den digitalen Teilnehmeranschluß aufzubauen, an den sie angeschlossen sind, wobei die Rufbefehle, die in einem Konfigurationsmodul (33, 34) des ersten Adapters enthalten sind, an eine Steuerlogik (13) des digitalen Teilnehmeranschlusses im Fall eines Rufs nach einem ISDN-Zugang vom Pakettyp gerichtet werden, zu dem der zweite Adapter über ein an den ersten Adapter angeschlossenes Datenendgerät Zugang hat.

5. Konzentrationseinrichtung nach Anspruch 4, dadurch gekennzeichnet, daß sie mehrere miteinander über eingebaute geeignete Rufbefehle in ihren jeweiligen Befehlskonfigurationsmoduln miteinander verkettete Adapter enthält, um Datenpakete zwischen Datenendgeräten zu übertragen, die je an einen dieser Adapter und an einen gemeinsamen ISDN-Anschluß vom Paketmodustyp über einen gemeinsam benutzten Kanal B angeschlossen sind, falls gleichzeitig Übertragungen von Datenpaketen zwischen diesem ISDN-Zugang und mindestens bestimmten der Endgeräte vorliegen, die an die betrachteten Adapter angeschlossen sind.

## Claims

1. Concentration method adapted to enable a plurality of synchronous or asynchronous data terminals (3 to 6) to be served by a common B channel of an ISDN (2) to which said terminals are connected via a digital subscriber termination (1) and terminal adapters (7, 8) for transmission of data in packet mode, the data terminals being connected to the terminal adapters via V.24 digital interfaces and the terminal adapters being connected to the digital subscriber termination at the S0 basic access level providing access to two ISDN data B channels and one ISDN signalling D channel, the method being characterised in that if B channel communication is requested between a first data terminal served by a first terminal adapter and a packet mode ISDN port (10, 11) to which a second data terminal already has access via a second terminal adapter and a first B channel, a transit connection is established between the two terminal adapters via the digital subscriber termination by means of a second B channel so that data packets transmitted between the first data terminal and the ISDN port in question pass through the terminal adapter of the second data terminal and through the first B channel by which the second terminal adapter communicates with said ISDN port, and likewise in respect of packets relating to the second data terminal.

2. Concentrator arrangement adapted to enable a plurality of synchronous or asynchronous data terminals (3 to 6) to be served by a common B channel of an ISDN (2) to which said data terminals are connected via terminal adapters (7, 8) and a digital subscriber termination (1) for transmission of data in packet mode, the data terminals being connected to the terminal adapters via V.24 digital interfaces and the terminal adapters being connected to the digital subscriber termination at the S0 basic access level to obtain access to two ISDN data B channels and one ISDN signalling D channel via the digital subscriber termination, characterised in that it comprises means for establishing a transit connection via a B channel of a first terminal adapter serving a first data terminal and via the digital subscriber termination to a second terminal adapter serving a second data terminal already connected via another B channel to a packet mode ISDN port (10 or 11) to which the first data terminal is to be connected so that data packets conveyed in one direction between the first data terminal and the ISDN port pass through the terminal adapter of the second data terminal and through the B channel by which the second terminal adapter communicates with said ISDN port, packets conveyed in the same direction for both data terminals being conveyed by the same B channel between the second terminal adapter and the ISDN port.

3. Concentrator arrangement according to claim 2 characterised in that at least one of the terminal adapters comprises switching means (24, 25) enabling the transmission of packets of one of the B channels available to said terminal adapter to the other of said B channels enabling a transit connection to be established through it to a packet mode ISDN port to which said terminal adapter is connected via a B channel via a digital subscriber termination from a data terminal served by another terminal adapter connected to the same digital subscriber termination.

4. Concentrator arrangement according to claim 3 characterised in that the transit connection establishing means provide instructions whereby the first terminal adapter calls the second terminal adapter to set up a B channel connection between them via the digital subscriber termination to which they are connected incorporated in a configuration module (33, 34) of said first terminal adapter and sent to control logic (13) of the digital subscriber termination if the packet mode ISDN port to which said second terminal adapter has access is called by a data terminal connected to said first terminal adapter.

5. Concentrator arrangement according to claim 4 characterised in that it comprises a plurality of terminal adapters interconnected by incorporation of appropriate call instructions in their respective configuration modules for transmission of data packets between data terminals each connected to one of said terminal adapters and a common packet mode ISDN port by a common shared B channel in the event of simultaneous communication by means of co-existent data packets between said ISDN port and at least some of the data terminals connected to the terminal adapters in question.
